# EUROPEAN PATENT APPLICATION

(11) **EP 3 869 169 A2**
(43) Date of publication of application: **25.08.2021**
(21) Application number: 21154294.9
(22) Date of filing: 29.01.2021
(51) Int. Cl.: G01J 1/02, G01J 1/04, G01J 1/06, G01J 1/16, G02B 6/42

(54) **LOW ARTIFACT, HIGH SPEED, BALANCED OPTICAL DETECTOR ARRAY**

(30) Priority: 31.01.2020 US 202062968402 P
(71) Applicant: Thorlabs Inc., Newton, New Jersey 07860 (US)
(72) Inventor: Valdmanis, Janis A., Newton, NJ 07860 (US); Caputo II, Charles Patrick, Newton, NJ 07860 (US); Bachor, Patrick, Newton, NJ 07860 (US); Grant, Patrick, Newton, NJ 07860 (US)
(74) Representative: Grättinger Möhring von Poschinger Patentanwälte Partnerschaft mbB

(57) **Abstract**

Disclosed herein is a particular type of fiber-optic, high-speed, balanced detector array designed to have very low artifacts, compact design, and low cost. The design is easily expandable to multiple channels of individual or detector pairs and the addition of transimpedance amplifiers to amplify the detected optical signals. The bandwidth of these devices is currently in the range up to 10GHz with higher speeds being conceivable.

## Description

### CROSS REFERENCE TO RELATED APPLICATIONS

This application claims the benefit of U.S. Provisional Patent Application No. 62/968,402 filed on January 31, 2020. The disclosure of U.S. Provisional Patent Application 62/968,402 is hereby incorporated by reference.

### FIELD OF THE INVENTION

The present invention relates to optical balanced detectors, and more specifically to a low artifact, high speed, balanced optical detector array.

### BACKGROUND

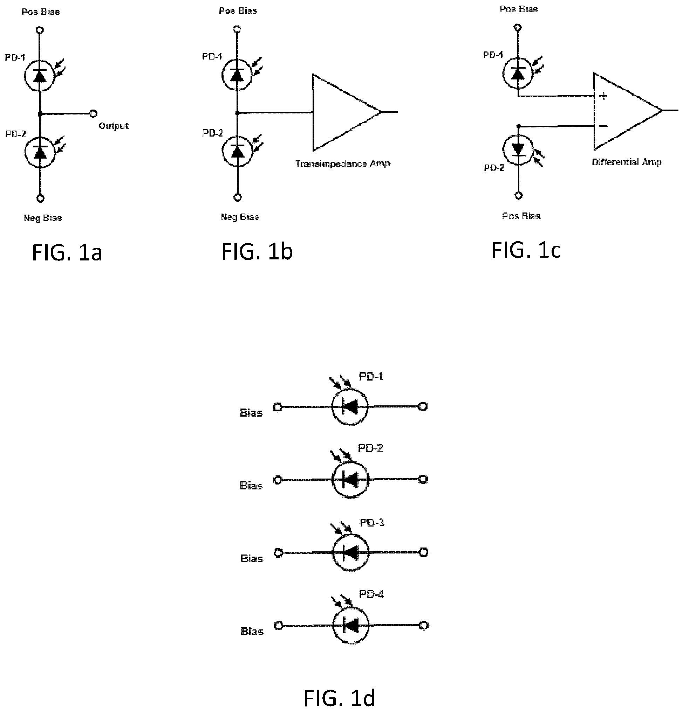

There are numerous coherent interferometric optical imaging and sensing techniques such as Optical Coherence Tomography (OCT), Light Detection and Ranging (LIDAR), and Optical Frequency Domain Reflectometry (OFDR). Such techniques are becoming more popular as the cost of lasers and digital signal processing go down. All these systems utilize some form of optical detection to convert an optical signal into an electrical signal via the use of an optical sensor device such as a photodiode. In many cases, the optical system produces a pair of differential signals, in which case a pair of balanced detectors, as shown in FIG. 1a, also be used to subtract the two signals. FIGS. 1b and 1c show examples of optical balanced detectors coupled to a transimpedance amplifier (TIA). This differential technique is used to increase the signal to noise ratio (SNR) and common mode rejection ratio (CMRR) in the resulting electrical signal. Detectors that use both components of a differential optical signal are referred to as balanced detectors and are electrically wired to produce the high-quality difference signal. Balanced detectors rely on having two well matched photodiodes - one for each component of a differential optical signal. This low-artifact technique can also be used for non-differential applications in which case the detectors in an array are all independent. FIG. 1d shows a simple array of matched photodetectors that operate independently but benefit from co-packaging.

Many of the above-mentioned applications convey the optical signals via fiber optics (as opposed to free-space, unguided light). This enables excellent routing and control of the optical signals, but it also requires detectors that are coupled directly to the ends of the fibers or with intervening optics to direct the light exiting the fibers into the detectors. In doing so, some of the detected light is often scattered resulting in poorer quality detection. In many systems, small amounts of light reflecting or scattering inside the optical detector is well tolerated, but imaging and sensing applications, like OCT, not only require high-speed, balanced detectors for best performance, but also require detectors that have very low artifacts in the resulting electrical signals (which converts to image data).

Artifacts can be caused by undesirable reflections and scattering within the detector that arise from internal interfaces reflecting or scattering some of the light either forwards or backwards along the optical path. This is particularly true for fiber-coupled detectors such as some embodiments described herein. Light that is reflected backward and coupled back into the fiber is known as optical return loss (ORL) or back-scatter which can degrade the performance of the system. Multiple reflections and/or scattering sites can also result in a weak time-delayed version of the optical signal being directed in the forward direction and collected by the optical sensor(s) inside the detector. These artifacts can negatively affect the performance of many optic systems, such as OCT imaging systems, by introducing noise and artificial signals.

Previous balanced detector designs for imaging and sensing applications have often used individual photodiode elements in separate, hermetic packages. This makes it difficult to have well-balanced performance at high speeds in a compact, low-cost package. This also makes integration and matching with transimpedance amplifiers far more difficult. Therefore, there is a long-felt need for a new design that enables the integration of many matched and balanced detectors in a single package with parallel input and output connections.

The goal of an embodiment is to minimize these artifacts while creating a detector array that is also high-speed, compact, robust, and low cost, all in an environmentally stable enclosure. The new design according to an embodiment described herein enables the integration of many high-speed, low-artifact, balanced detectors in a single robust package with parallel input and output connections.

### SUMMARY

Disclosed herein is a particular type of fiber-optic, high-speed, balanced detector array designed to have, among other attributes, very low artifacts, compact design, and low cost. The design is easily expandable to multiple channels of individual or detector pairs and the addition of transimpedance amplifiers to amplify the detected optical signals. The bandwidth of these devices is currently in the range of 1 kHz to 10 GHz with higher speeds beyond 10 GHz being required for more advanced optical systems, and devices below 1 kHz for other applications.

An embodiment of the present invention provides a fiber optic detector, including: a semiconductor detector array having a plurality of photodetectors; an array of optic fibers configured to guide light beams into the plurality of photodetectors; wherein each fiber in the array of optic fibers has its output end beveled at an angle such that exiting light beam travels at an angle relative to the fiber axis and impinges on a photodetector along a main beam path which is not normal to the surface of the photodetector; wherein the bevel angle is chosen such that reflections from surfaces in the path of the light beam are directed out of the main beam path and avoid being detected by the photodetector or being sent in a reverse direction along the fiber axis. Thus protecting the system from back-scattered or multiple scattered photons.

### BRIEF DESCRIPTION OF THE DRAWINGS

FIG. 1a shows a circuit diagram of simple optical balanced detector with no amplifier. FIG. 1b shows the balanced photo detectors with a transimpedance amplifier. FIG. 1c shows a pair of matched photo detectors feeding a differential amplifier. FIG. 1d shows a simple array of matched photo detectors.
FIG. 2 shows various engineering views of a balanced optical detector package according to an embodiment with input fiber connectors.
FIG. 3 is a perspective view of a balanced optical detector assembly with lid according to an embodiment.
FIG. 4 is a perspective view of a balanced optical detector assembly without lid showing internal components according to an embodiment.
FIG. 5 is a top view of a balanced optical detector assembly according to an embodiment where the alignment of the fiber tips to the PD elements can be seen.
FIG. 6 is a side view of a balanced optical detector assembly according to an embodiment.
FIG. 7 is a side view of an assembly according to an embodiment showing the details of the main beam and associated stray beams that could contribute to artifacts if they are not eliminated from the intended signal beam path.
FIG. 8 shows the time-domain pulse response of a balanced optical detector according to an embodiment.
FIG. 9 shows the frequency response of a balanced optical detector according to an embodiment.

### DETAILED DESCRIPTION OF THE PREFERRED EMBODIMENTS

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise. Moreover, the features and benefits of the invention are illustrated by reference to the exemplified embodiments. Accordingly, the invention expressly should not be limited to such exemplary embodiments illustrating some possible non-limiting combination of features that may exist alone or in other combinations of features; the scope of the invention being defined by the claims appended hereto.

This disclosure describes the best mode or modes of practicing the invention as presently contemplated. This description is not intended to be understood in a limiting sense, but provides an example of the invention presented solely for illustrative purposes by reference to the accompanying drawings to advise one of ordinary skill in the art of the advantages and construction of the invention. In the various views of the drawings, like reference characters designate like or similar parts.

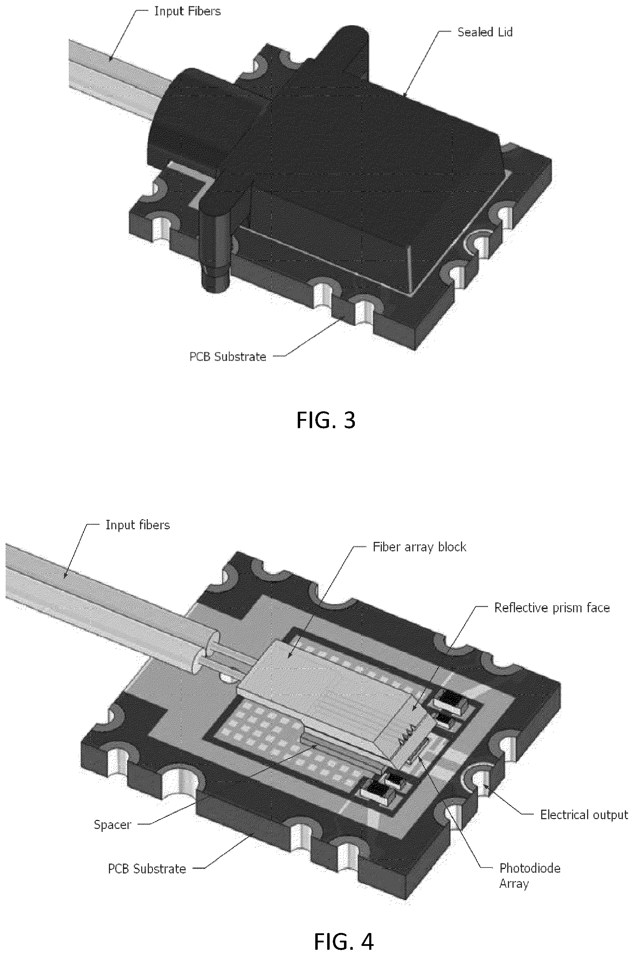

An embodiment of the present invention is a matched, high-speed photodetector array (PDA) that offers very low optical artifacts in both forward and reverse directions is shown in FIGS. 3 and 4. This is especially useful for applications that are sensitive to undesirable reflections and scattering in the optical path near the PDA. (e.g., OCT, LIDAR). This is accomplished by the use a fiber array that is terminated by a special, angle-polished prism to direct the optical beam from the fibers to the PDA. (e.g., V-groove array polished to provide total internal reflection). Angle-polishing can be supplemented or replaced by many other techniques utilized to produce optical components, for example via laser shaping, laser machining of the desired prism feature, or via Magnetorheological Finishing (MRF).

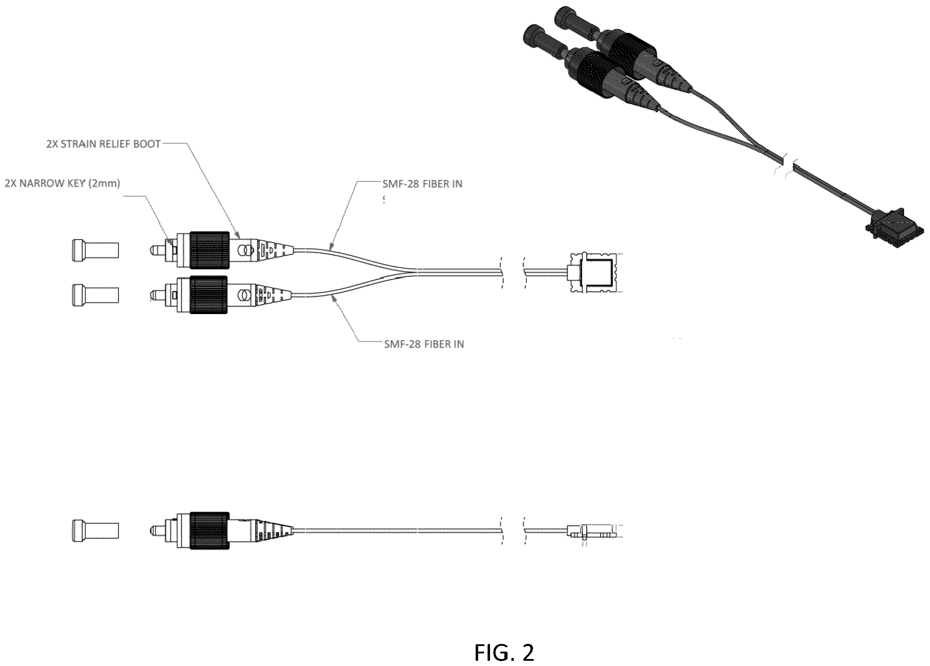

As shown in FIG. 2, a balanced optical detector package according to an embodiment may include a pair of input fibers with fiber connectors. Optical signals are fed into the input fibers for signal detection by the balanced detector. FIG. 3 shows the detector package with a sealed lid, and FIG. 4 shows the components of the detector package on a PCB substrate without the lid.

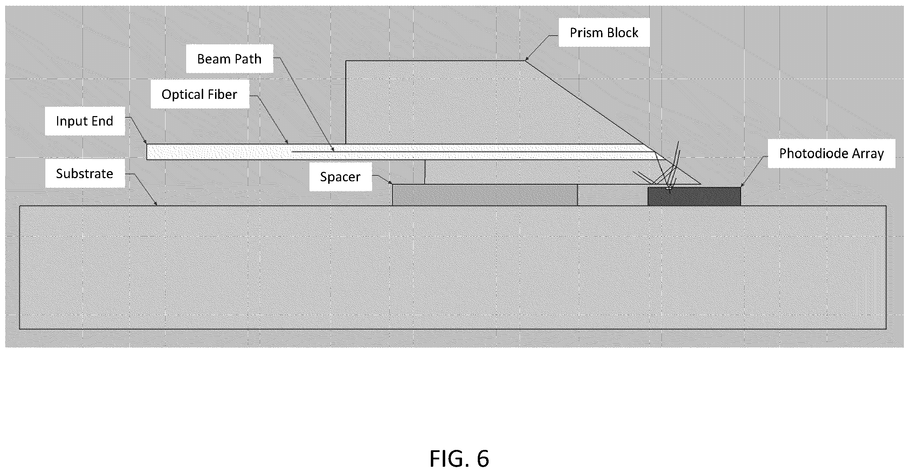

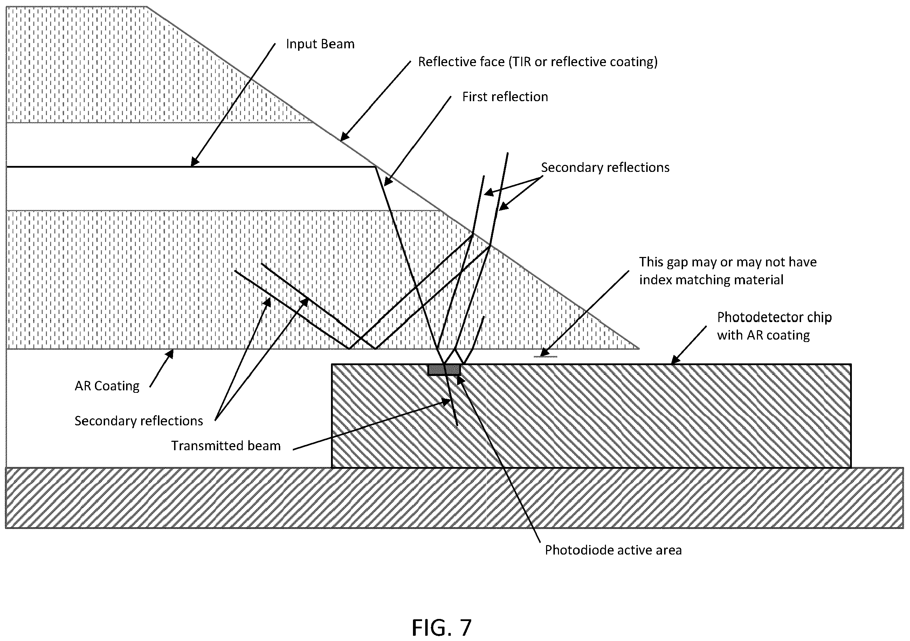

As shown in FIGS. 6 and 7, the prism is positioned near the PDA in such a way that assures any stray secondary reflections from intermediate surfaces are directed out of the optical path in either direction, forwards to the PDA or backwards along the optical fiber. Backwards reflections coupling back into the fiber is commonly known as optical return loss (ORL). As shown in FIG. 6, the prism is bonded to a precision thickness spacer that positions the lower surface of the prism a small distance above the PDA surface according to an embodiment.

FIG. 7 shows the details of the main beam and associated stray beams that could contribute to artifacts if they are not eliminated from the beam path. The PDA commonly has an anti-reflection coating (ARC) that minimizes the reflections from the PDA surface and increases the sensitivity of the PDA. Additional surfaces of the prism may be conditioned so as to aid in eliminating reflections from the optical path (e.g., the front tip may be shortened). An ARC may also be added to the bottom surface of the prism to avoid multiple reflections between the prism and the PDA. A mirror coating may also be added to the reflecting surface of the prism to enhance the reflectivity. Both the spacer and the PDA are bonded to the same substrate to maintain alignment and stability. Index matching material may also be added to the space between the prism and the PDA to minimize reflections. The PDA enables the individual photodetector elements to be closely matched in performance since they come from neighboring locations of the same semiconductor wafer. Alternatively the individual photodetectors can be screened and paired so as to ensure matching. This is critical when creating balanced or differential pairs of detectors for applications such as OCT.

The fiber array enables easier length matching of fibers for applications that are sensitive to phase differences between the balanced detectors (e.g., OCT). Fiber array alignment to the PDA is assured because both components are fabricated using micro-fabrication techniques that typically have tolerance of less than 1 µm. The prism holding the fibers allows for precision polishing of the reflection angle at the fiber ends that enables low-artifact performance. In one embodiment, the bevel angle of the fiber end is chosen such that reflections from surfaces in the path of the light beam are directed out of the main beam path and avoid being detected by the photodetector or being sent in a reverse direction along the fiber axis. The bevel angle depends on one or more of the following: component spacing, fiber emission angle, detector size, etc. In one embodiment, coatings are included in the package so as to absorb some of the stray light that is typically found in optical devices.

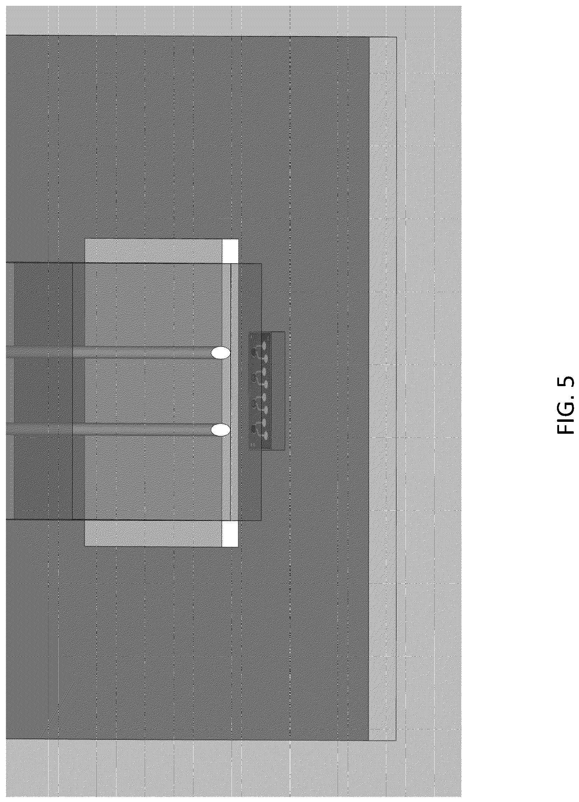

The use of arrayed optical components allows for precision alignment of small detectors that offer high-speed, balanced performance. In FIG. 5, the top view of the detector package shows the advantage of an embodiment that a pair of fibers may be precisely located above two selected photo detectors in the array, so that light may be directed into the active areas of the photo detectors. This same principle applies to the use of many detectors. Fig. 5 shows the possibility of using all four detectors if the fiber array had four fibers.

Returning to FIG. 3, in which the detector package including a sealed lid is shown. Note that the optical path may also benefit from a sealed environment that keeps out contaminants, some of which could increase unwanted scattering. This is accomplished by the use of a metal or polymer lid that is sealed to the substrate in such a way that allows the optical fibers to pass through the wall of the lid and maintain the environmental seal that limits the rate of permeability of such environmental components such as dust particles, water vapor, and oxygen for example. One example of such a lid material is Liquid Crystal Polymer (LCP), a common material for sealing electronics components. Special, low-permeability epoxies are used to create the lid and fiber seals. It is understood that many packaging approaches could be used to fabricate a robust assembly, for example a laser welded fully hermetically sealed package.

This geometry also enables the straight-forward addition of amplifiers at the output of the PDA within the same compact package. This geometry also enables an arrayed electrical output such as vias or ball-grid array.

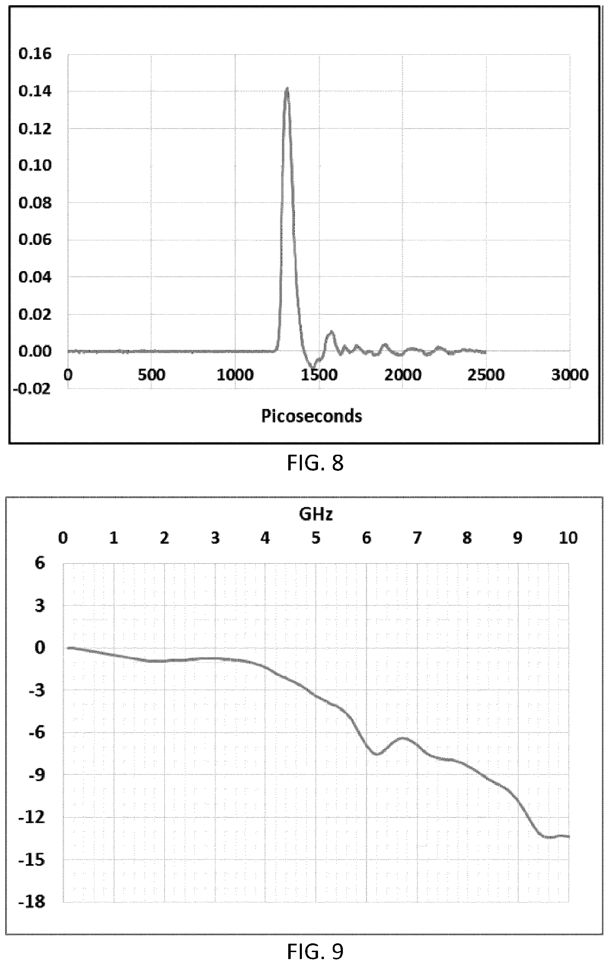

FIG. 8 shows the typical time-domain pulse response performance of a balanced photodetector according an embodiment, and FIG. 9 shows the typical frequency response performance of a balanced photodetector according an embodiment.

While the present invention has been described at some length and with some particularity with respect to the several described embodiments, it is not intended that it should be limited to any such particulars or embodiments or any particular embodiment, but it is to be construed so as to provide the broadest possible interpretation in view of the prior art and, therefore, to effectively encompass the intended scope of the invention. Furthermore, the foregoing describes the invention in terms of embodiments foreseen by the inventor for which an enabling description was available, notwithstanding that insubstantial modifications of the invention, not presently foreseen, may nonetheless represent equivalents thereto.

## Claims

1. A fiber optic detector, comprising:
an array of photodetectors;
an array of optic fibers configured to guide light beams into the array of photodetectors;
wherein each optic fiber in the array of optic fibers comprises an output end that is beveled at an angle such that exiting light beam travels at an angle relative to an optic fiber axis and impinges on a corresponding photodetector in the array of photodetectors along a main beam path which is not normal to a surface of the photodetector;
wherein the bevel angle is chosen such that reflections from surfaces in the path of the light beam are directed out of the main beam path and avoid being detected by the photodetector or being sent in a reverse direction along the optic fiber axis.

2. The fiber optic detector of claim 1, wherein the output ends of the optic fibers are embedded in a support structure that holds the optic fibers in an array with a fiber-to-fiber pitch that substantially matches a detector-to-detector pitch of the array of photodetectors.

3. The fiber optic detector of claim 1, wherein at least one surface in the path of the light beam has an anti-reflection coating (ARC) to improve coupling efficiency between fibers and active areas of the photodetectors.

4. The fiber optic detector of claim 1, wherein the photodetectors are electrically connected in balanced pairs such that the photocurrents from a given pair subtract.

5. The fiber optic detector of claim 1, wherein one or more transimpedance amplifiers (TIA) are incorporated to amplify photocurrents and convert the photocurrents into voltage signals.

6. The fiber optic detector of claim 1, wherein an area of the photodetectors is restricted to a small area with a mesa structure, impregnated oxide layer, or hard aperture.

7. The fiber optic detector of claim 1, wherein substantially resistive terminations between output signals and ground are incorporated.

8. The fiber optic detector of claim 1, wherein DC blocking capacitors are incorporated.

9. The fiber optic detector of claim 1, wherein the array of photodetectors and/or array of optic fibers is reduced to a single photodetector and/or a single optic fiber.

10. The fiber optic detector of claim 1, wherein a conventional hermetic package is utilized.

11. The fiber optic detector of claim 1, wherein the fiber optic detector is constructed with a package, comprising: a printed circuit board (PCB) substrate and an LCP lid.

12. The fiber optic detector of claim 11, wherein the lid is attached to the substrate with epoxy.

13. The fiber optic detector of claim 11, wherein the optic fibers pass through a tunnel in the lid and the tunnel is filled with epoxy.

14. The fiber optic detector of claim 13, wherein the epoxy in the tunnel is injected through a hole in the substrate.

15. The fiber optic detector of claim 11, wherein the output signals go to castellated vias around the edges of the substrate.

16. The fiber optic detector of claim 11, wherein output signals pass though the substrate with filled vias and then go to pads either adjacent to or covering a via on a bottom side of the substrate.

17. The fiber optic detector of claim 16, wherein solder balls or pins are added to the pads.
